(19) Europäisches Patentamt
European Patent Office
Office européen des brevets

(11) Veröffentlichungsnummer: **0 273 482 A1**

# (12) EUROPÄISCHE PATENTANMELDUNG

(21) Anmeldenummer: **87202296.7**

(22) Anmeldetag: **24.11.87**

(51) Int. Cl.[4]: **H02K 16/00**, H02K 21/18, A47J 43/08

(30) Priorität: **26.11.86 DE 3640398**

(43) Veröffentlichungstag der Anmeldung: **06.07.88 Patentblatt 88/27**

(84) Benannte Vertragsstaaten: **AT CH DE ES FR GB IT LI**

(71) Anmelder: **Philips Patentverwaltung GmbH**
**Wendenstrasse 35 Postfach 10 51 49**
**D-2000 Hamburg 1(DE)**

(84) **DE**

(71) Anmelder: **N.V. Philips' Gloeilampenfabrieken**
**Groenewoudseweg 1**
**NL-5621 BA Eindhoven(NL)**

(84) **CH ES FR GB IT LI AT**

(72) Erfinder: **Bertram, Leo**
**Am Sender 10**
**D-5190 Stolberg(DE)**
Erfinder: **Schemmann, Hugo, Dr.**
**Zwartebergweg 6**
**NL-6371 XD Schaesberg(NL)**
Erfinder: **Steiner, Peter Erwin**
**Feldm.-Conrad-Platz 9**
**A-9020 Klagenfurt(AT)**

(74) Vertreter: **Kupfermann, Fritz-Joachim, Dipl.-Ing. et al**
**Philips Patentverwaltung GmbH**
**Wendenstrasse 35 Postfach 10 51 49**
**D-2000 Hamburg 1(DE)**

## (54) Antriebsvorrichtung für ein kleines elektrisch angetriebenes Gerät und Verfahren zum Zusammenbau der Antriebsvorrichtung.

(57) Eine Antriebsvorrichtung für ein kleines elektrisches Gerät, wie einen Zerkleinerer, ein Schnitzelwerk, eine Pumpe, ein Hobbygerät hat, mit mindestens zwei Antriebsmotoren (27, 33), die gemeinsam die Arbeitswelle (13) einer Last (11) antreiben. Die Rotorwellen (23, 29) aller als zweipolige Einphasensynchronmotoren (27, 33) mit permanentmagnetischem Rotor (25, 31) ausgebildeten Antriebsmotoren sind axial miteinander gekuppelt, wobei alle Rotoren (25, 31) hinsichtlich ihrer magnetischen Polarisierung (40) in bezug auf die zugeordnete Statorgeometrie gleich orientiert sind, wobei ein die Rotorwellen (23, 29) kuppelndes Element (35) die Rotorwellen (23, 29) derart kuppelt, daß die natürliche Ruhelage $\theta = \theta_0$ in montiertem Zustand erhalten bleibt. Dabei bedeutet $\theta$ eine die Rotorwinkelposition gegenüber der Hauptrichtung des Statorfeldes kennzeichnende Koordinate. Weiter ist wichtig, daß das bei einem positiven Strom erzeugte Moment beide Motoren (27, 33) in der gleichen Richtung dreht.

EP 0 273 482 A1

19
3
9
17
33
31
29
39
35
37
27
25
11
7
13
23
21
15
1

Fig.1

# Antriebsvorrichtung für ein kleines elektrisch angetriebenes Gerät und Verfahren zum Zusammenbau der Antriebsvorrichtung.

Die Erfindung bezieht sich auf eine Antriebsvorrichtung für ein kleines elektrisches Gerät, wie einen Zerkleinerer, ein Schnitzelwerk, eine Pumpe, ein Hobbygerät, mit mindestens zwei Antriebsmotoren, die gemeinsam die Arbeitswelle einer Last antreiben sowie auf ein Verfahren zum Zusammenbau der Antriebsvorrichtung.

Es sind kleine Haushaltsgeräte bekannt, die von zweipoligen Einphasensynchronmotoren angetrieben werden. Diese Motoren weisen eine Reihe von Vorteilen auf, wie kompakte Bauweise und hohe Leistung pro Volumen. Bei einer Beschränkung der Produktion auf wenige Motortypen läßt sich deren Herstellen automatisieren und der Herstellungspreis außerordentlich wirtschaftlich gestalten. Durch die Massenproduktion von nur wenigen Motortypen läßt sich aber nicht das ganze Bedarfsspektrum abdecken. Die in Massenproduktion gefertigten Typen sind auf ein Leistungsspektrum ausgerichtet, das in einer ganzen Reihe von Geräten einsetzbar ist.

Vielfach besteht zusätzlich die Forderung, die starken, auf die Last wirkenden Drehmomentschwankungen des Einphasensynchronmotors zu reduzieren, um eine größere Laufruhe für bestimmte Geräte zu erzielen.

Ein Motortyp, der sich in der Praxis als sehr erfolgreich erwiesen hat, ist ein Einphasensynchronmotor von etwa 10 W Abgabeleistung an der Rotorwelle. Ist die Leistung dieses Motors zu gering und wird erwogen, einen Einphasensynchronmotor doppelter Leistung, ca. 20 W Abgabeleistung, an der Rotorwelle herzustellen, dann verlangt diese Verdoppelung der Leistungsabgabe an der Rotorwelle mehr als nur eine Änderung der Dimensionierung in Richtung auf eine Verdoppelung der Abgabeleistung. Für die Produktion müßte eine neue Produktionslinie aufgebaut werden mit neuen bzw. abgewandelten Maschinen für die Herstellung der Bleche, das Wickeln der Spulen usw.. Die Einführung eines neuen Motortyps würde damit insgesamt den zu betreibenden Aufwand beträchtlich erhöhen, insbesondere wenn ein solcher Motor nur für ein bestimmtes Produkt in begrenzter Stückzahl und nicht für eine Produktpalette einsetzbar ist, so daß sich der Aufwand für eine neue automatisierte Fertigungslinie nicht lohnt.

Außerdem kann mit einem einzelnen leistungsstärkeren Einphasensynchronmotor keine Verbesserung der Laufruhe mit Hilfe einer Verringerung der Drehmomentschwankungen erreicht werden.

Aus der EP-Patentanmeldung 127 050 ist es bekannt, eine Küchenmaschine mit wenigstens zwei Elektromotoren anzutreiben, die über Schneckenwellen auf ein gemeinsames Schneckenzahnrad arbeiten. Derartige Schneckengetriebe haben eine außerordentlich starke Selbsthemmung und erhöhen damit den Leistungsbedarf. Würde man aus Dynamik-, Leistungs-und Kostengründen die Antriebsmotoren als Einphasensynchronmotoren ausbilden, dann ergäbe sich die Schwierigkeit, daß die Synchronmotoren bei starker Belastung an der Antriebswelle überhaupt nicht starten. Des weiteren ist festzustellen, daß bei willkürlicher Konstruktion und Anordnung eines derartigen Mehrmotorenantriebes bei Verwendung von Einphasensynchronmotoren das Anlaufen der Geräte schwierig ist und in vielen Fällen nicht gelingt. Das Gerät führt vielmehr eine chaotische Bewegung mit viel Lärm und Vibrationen aus oder bleibt überhaupt stehen.

Es ist Aufgabe der Erfindung, eine Antriebsvorrichtung der eingangs erwähnten Art derart reibungsarm zu gestalten, daß im Prinzip als Antriebsmotoren Einphasensynchronmotoren einsetzbar sind und eine Konstruktions-und Einbauvorschrift anzugeben, die einen sicheren Anlauf und Betrieb gewährleistet, und weiterhin zusätzlich die Möglichkeit besteht, die Laufruhe zu verbessern.

Die gestellte Aufgabe ist dadurch gelöst, daß die Rotorwellen aller als zweipolige Einphasensynchronmotoren mit permanentmagnetischem Rotor ausgebildeten Antriebsmotoren axial miteinander gekuppelt sind, wobei erstens alle Rotoren hinsichtlich ihrer magnetischen Polarisierung in bezug auf den zugeordneten Stator stets gleich orientiert sind und wobei ein die Rotorwellen kuppelndes Element die Rotorwellen derart kuppelt, daß bei stromlosen Spulen die natürliche Ruhelage $\theta = \theta_0$ im montierten Zustand erhalten bleibt, wobei $\theta$ eine die Rotorwinkelposition gegenüber der Hauptrichtung des Statorfeldes kennzeichnende Koordinate ist, und wobei das von einem positiven Strom erzeugte Drehmoment beide Motoren in die gleiche Richtung dreht. Die positive Stromrichtung ist dabei diejenige, in der bei Drehung des Rotors zunächst der mit den Spulen gekoppelte Permanentmagnetfluß maximal ist und danach um kleine Winkel versetzt das magnetische Klebemoment, das der Rotor auch bei stromlosen Statorspulen erfährt, gleich 0 wird und der Rotor dort eine stabile Ruhelage einnimmt.

Auf diese Weise ist es möglich, die Rotoren von wenigstens zwei Einphasensynchronmotoren über eine gemeinsame Welle auf eine gemeinsame Arbeitswelle arbeiten zu lassen. Die Einphasensynchronmotoren können dabei, wenn beispielsweise die Endleistung 20 W sein soll, für eine Einzelleistung von 10 W ausgelegt sein und aus einer Großserienfertigung für 10 W-Motoren übernommen werden. Bei Beachtung der Rotorkonstellationen in den Statoranordnungen und des Wicklungssinnes sowie des Anschlusses der Statorspulen untereinander ist ein einwandfreier Anlauf und Betrieb sichergestellt. Es ist hierbei nicht erforderlich, daß die Statorhauptachsen in die gleiche Richtung weisen.

An sich ist es aus der DE-OS 24 18 242 bekannt, zwei Elektromotoren axial miteinander zu kuppeln. Bei den dabei zum Einsatz gebrachten Motoren, einem vielpoligen Induktionsmotor und einem Reihenschlußmotor, kommt es aber nicht auf die gegenseitige Winkelverstellung der Rotoren an, um einen guten Lauf zu gewährleisten. Die Patentanmeldung beschäftigt sich mit der Lagerung der Motoren und der Ausgestaltung der Kupplungselemente.

Nach einer weiteren Ausgestaltung der Erfindung ist vorgesehen, daß bei der Herstellung jedes Rotors die Kraftübertragungsflächen der jeweiligen Mitnehmerkonstruktionen an den entsprechend zu koppelnden Wellenenden bei allen Motoren im stromlosen Zustand vor dem Zusammenbau räumlich die gleiche Orientierung haben, so daß beim formschlüssigen Verbinden keine gegenseitigen Verdrehkräfte auf die Rotoren ausgübt werden können. Beim Einsatz von Mitnehmerverbindungen, die aus einem Zahnrad und Zahnkranz bestehen, muß z. B. der Zahnkranz in bezug auf die Orientierung des Zahnrades und der Rotormagnetisierungsrichtung um die halbe Zahnteilung $\frac{m \cdot \pi}{2}$ verdreht sein, wobei m der Modul ist. Über diese Gestaltung der Mitnehmerenden läßt sich sicherstellen, daß die magnetische Orientierung der einzelnen Rotoren immer aufeinander abgestimmt ist.

Nach einer weiteren Ausgestaltung der Erfindung ist vorgesehen, daß die Rotoren mit einer ihre Polarisierung kennzeichnenden Markierung versehen sind. Montagefehler auf der Fertigungsstraße lassen sich damit vermeiden.

Nach einer weiteren Ausgestaltung der Erfindung ist vorgesehen, daß beim Einsatz von für 110 V ausgelegten Motoren immer zwei Motoren in Reihe schaltbar sind. Durch die Umschaltung von je zwei Motoren von Parallel-auf Reihenschaltung ist es möglich, die Betriebsspannung von 110 V auf 220 V heraufzusetzen ohne Wicklungsveränderung. Für den Export von Geräten in Länder mit Netzspannung von 110 V läßt sich so ohne Veränderung des auf der Fertigungslinie produzierten einheitlichen Motors die Umschaltbarkeit mit geringstem technischem Aufwand realisieren.

Nach einer weiteren Ausgestaltung der Erfindung ist ein Verfahren zum Zusammenbau einer Antriebsvorrichtung der zuvor beschriebenen Art dadurch gekennzeichnet, daß die Rotoren vor ihrem Kuppeln mittels eines Gleichspannungsimpulses in die gewünschte Orientierung hinsichtlich der Statorgeometrie gebracht werden. Auf diese Weise läßt sich ein Bereitstellen von Motoren mit gleicher Orientierung der Rotorstellung am Montageplatz vollautomatisch sicherstellen, wobei zusätzlich eine optische Kontrolle durch eine Farbmarkierung der Polarisationsrichtung des Rotors ergänzend möglich ist.

Nach einer weiteren Ausgestaltung der Erfindung ist vorgesehen, daß im zusammengebauten Zustand der Winkel $\theta$ zwischen der Statorhauptfeldrichtung und der Magnetisierungsrichtung des Rotors bei beiden Motoren um einen Winkel, der kleiner ist als 90°, unterschiedlich ist. Hierdurch sinkt zwar das kritische Klebemoment und die Leistung der Gesamtanordnung, es lassen sich jedoch die auf die Last wirkenden Drehmomentschwankungen verkleinern, so daß der Lauf ruhiger wird. Vor allem bei Antriebsaufgaben mit geringer Startreibung kann dies von Vorteil sein.

Die Erfindung wird anhand des in der Zeichnung dargestellten Ausführungsbeispieles näher erläutert. Es zeigen:

Fig. 1 einen Schnitt durch ein kleines Haushaltsgerät, das von zwei auf eine Arbeitswelle arbeitenden Einphasensynchronmotoren angetrieben wird,

Fig. 2 eine schaubildliche vergrößerte Darstellung der auf eine gemeinsame Arbeitswelle arbeitenden Rotoren von Einphasensynchronmotoren, wobei die kuppelnden Wellenstümpfe zwischen den Rotoren nebeneinander dargestellt sind,

Fig. 3 eine Explosionsansicht einer anderen Anordnung, bei der die beiden Rotoren mit Hilfe eines Zwischenstückes gekoppelt werden,

Fig. 4 einen schaubildlich dargestellten Einphasensynchronmotor zur Erläuterung gegenseitiger Winkelbeziehungen zwischen Rotor und Stator.

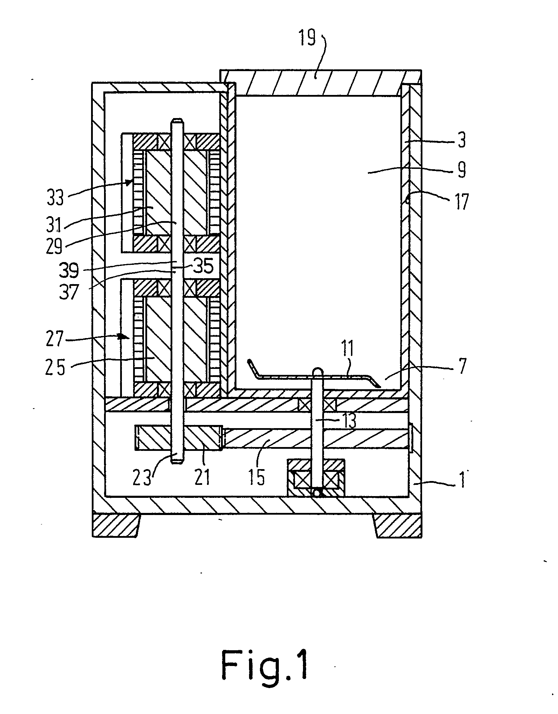

Fig. 1 zeigt einen Schnitt durch ein kleines elektrisches Haushaltsgerät. Dieses kleine elektrische Haushaltsgerät kann beispielsweise ein Mixer sein. Das Haushaltsgerät besteht aus einem Grundkörper 1 mit dem elektrischen Antrieb und einem Zerkleinerungsbecher 3, der in den Grundkörper 1 einsetzbar ist. Im Bodenbereich 7 des Becherinnenraumes 9 befindet sich ein Zerkleinerungsmesser 11, dessen Antriebswelle 13 zu einem Antriebszahnrad 15 nach unten herausgeführt ist. Der Zerkleinerungsbecher 3 ist aus einer Aufnahme 17 des Grundkörpers 1 herausnehmbar. Mit Hilfe eines Deckels 19 kann der Zerkleinerungsbecher 3 oben geschlossen werden. Das Antriebszahnrad 15 kämmt mit einem Zahnrad 21, das auf eine Motorwelle 23 aufgeflanscht ist. In Flucht mit der Motorwelle 23, die zum Rotor 25 eines Einphasensynchronmotors 27 gehört, fluchtet eine Welle 29, die die Welle des Rotors 31 eines weiteren Einphasensynchronmotors 33 ist.

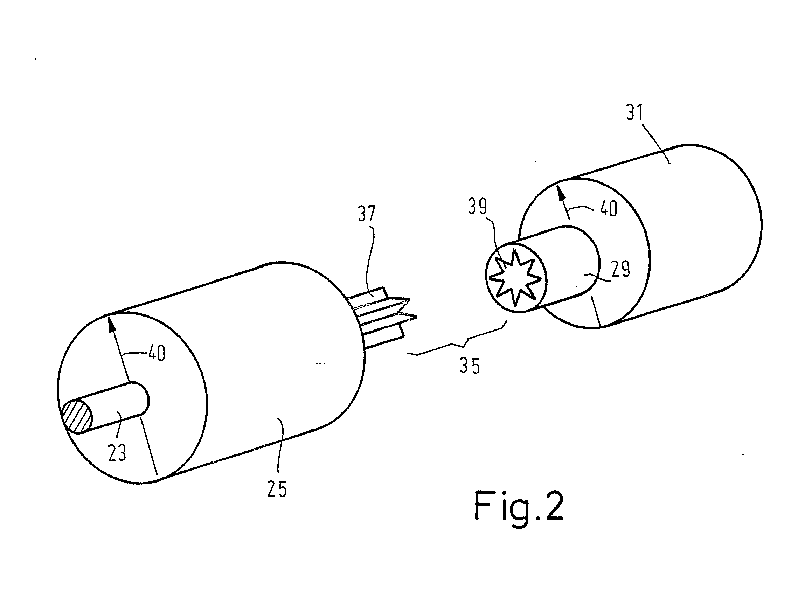

Die Wellen 23 und 29 der Einphasensynchronmotoren 27 und 33 liegen damit in Reihe, und die Einphasensynchronmotoren 27 und 33 treiben gemeinsam das Zerkleinerungsmesser 11 an. Wie sich aus Fig. 2 ergibt, ist die gegenseitige Drehlage der Rotoren 25 und 31 festgelegt durch eine vorgegebene Wellenkupplung 35. Diese Wellenkupplung ist aufgebaut aus Kupplungsteilen 37 und 39, die aus einem zahnradförmigen Kupplungsteil 37 einerseits und einem zahnkranzförmigen Kupplungsteil 39 andererseits bestehen. Werden die Kupplungsteile 37 und 39 ineinander geschoben, dann nehmen die einzelnen Rotoren 25 und 31 eine vorgegebene Drehlage ein. Die relative Lage der Kupplungsteile 37 und 39 zur Magnetisierungsrichtung 40 der zugeordneten Dauermagnetrotoren 25 und 31 muß so gewählt sein, daß beim Ineinanderschieben der beiden Kupplungsteile 37,39 keine Verdrehung der Rotoren aus ihrer Ruhelage erfolgt, wenn die maximale Leistung beider Motoren auf die Last übertragen werden soll ohne Verbesserung der Laufruhe.

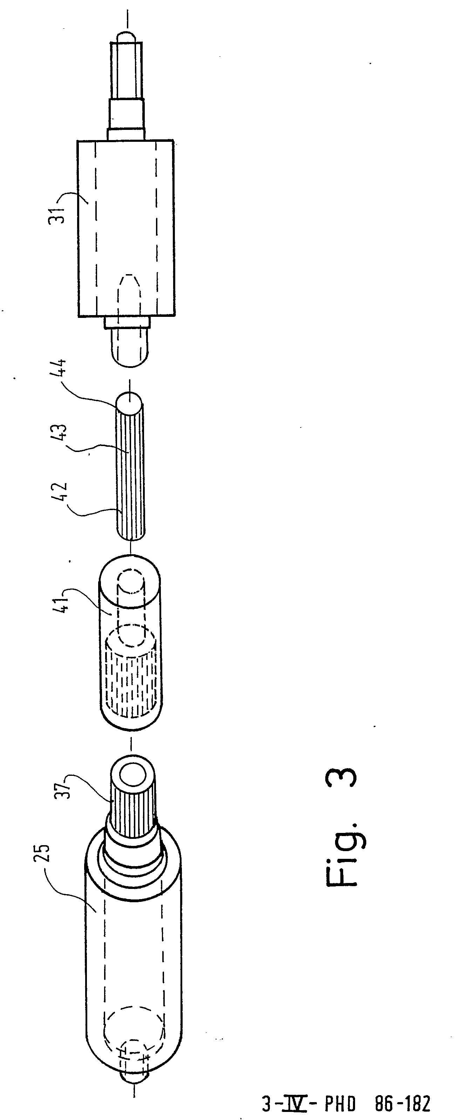

Fig. 3 zeigt eine wirtschaftliche Verbindung zwischen den Rotoren 25 und 31. Auf den Rotor 25 ist das Kupplungsteil 37 aufgepreßt. Auf das Kupplungsteil 37 ist ein Zwischenstück 41 aufsteckbar, das den Innenzahnkranz des Kupplungsteiles 39 aus Fig. 2 aufweist. In dieses Zwischenstück ist axial ein Ende 42 eines längsgeriffelten Stiftes 43 einsteckbar. Das andere Ende 44 des Stiftes 43 ist schließlich in eine hohle Buchse 45 eindrückbar, die zuvor in den anderen Rotor 31 eingepreßt wurde. Das Eindrücken des Endes 44 in die Buchse 45 erfolgt bei ausgerichteten Rotoren 25 und 31 entsprechend Fig. 2.

Es muß auch gewährleistet sein, daß alle Motoren aus der so definierten Lage beim Anlegen des Stromes ein Drehmoment in der gleichen Richtung erfahren. Bei gleichem Wicklungssinn der Statorspulen müssen die Nordpole aller Rotoren den gleichen Winkel mit der sich bei positivem Strom ergebenden Statorfeldrichtung aufweisen. Um dies zu kontrollieren können bei der Magnetisierung Markierungen, beispielsweise Farbmarkierungen, auf den Rotoroberflächen vorgenommen werden, die dann später als Montagehilfen wirken.

Es ist aber auch möglich, die gegenseitige richtige Lage der Rotormagneten dadurch bei der Montage sicherzustellen, daß dem Montagevorgang ein Ausrichtvorgang vorgeschaltet wird, bei dem mittels eines Gleichspannungsimpulses die Rotoren immer in die richtige gewünschte Zusammenbaurichtung gedreht werden.

Soll die Laufruhe verbessert werden, wobei ein Anlaufmoment-und Leistungsverlust auftritt, so müssen die Rotoren 25, 31 hinsichtlich ihrer magnetischen Polarisierungsrichtung 40 in bezug auf die zugeordnete Statorgeometrie einen Winkel miteinander bilden können, der kleiner 90° ist, derart, daß die im Stillstand auftretenden Reibungsmomente überwunden werden können und die auf die Last wirkenden Drehmomentschwankungen minimiert werden.

Die Motorwicklungen der Einphasensynchronmotoren 27, 33 können in Reihe oder parallel geschaltet werden. Eine Reihenschaltung kommt dann in Betracht, wenn beispielsweise bei einer Auslegung der Motoren für eine Netzspannung von 110 V beide Einphasensynchronmotoren an 220 V betrieben werden sollen. Durch die Reihenschaltung ergibt sich dann die richtige Motorspannung. Soll das Gerät an 110 V betrieben werden, dann werden die Motoren parallelgeschaltet.

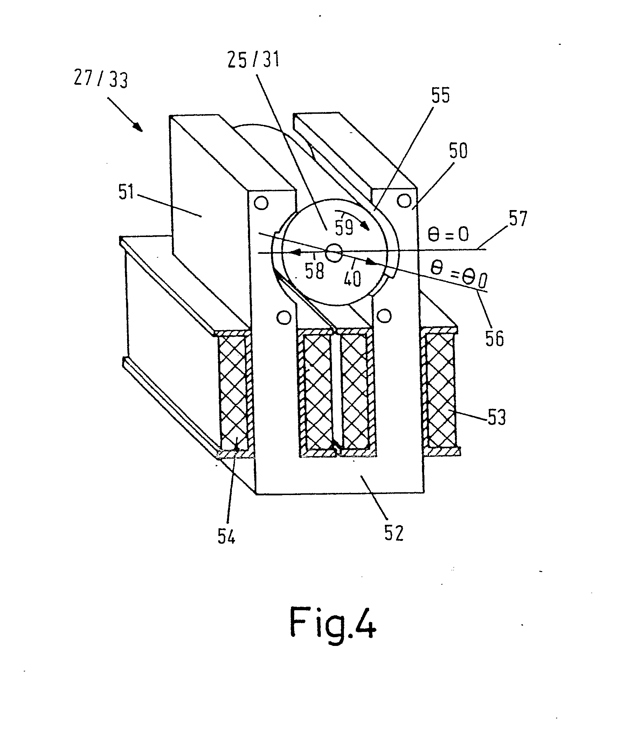

Fig. 4 zeigt den Aufbau der zu kuppelnden Motoren 27 und 33. Auf die Schenkel 50, 51 des U-förmigen Statoreisens 52 sind Erregerspulen 53, 54 aufgeschoben. Im Luftspalt 55 zwischen den Schenkeln 50, 51 ist ein permanentmagnetischer Rotor 25, 31 angeordnet. Die Ruhelage des Rotors bei stromlosen Erregerspulen 53, 54 ist angegeben durch eine Linie 56. Das Statorhauptfeld verläuft in Richtung der Linie 57. Ein Pfeil 58 gibt die Hauptfeldrichtung bei positivem Statorstrom an. Die Magnetisierungsrichtung des Rotors ist durch den Pfeil 40 angegeben bei Ruhelage des Rotors. Die positive Drehrichtung zeigt ein Pfeil 59. In der Rotorposition $\theta = 0$ ist der mit den Erregerspulen verkettete Rotorfluß maximal.

## Ansprüche

1. Antriebsvorrichtung für ein kleines elektrisches Gerät, wie einen Zerkleinerer, ein Schnitzelwerk, eine Pumpe, ein Hobbygerät, mit mindestens zwei Antriebsmotoren, die gemeinsam die Arbeitswelle (13) einer Last (11) antreiben, dadurch gekennzeichnet, daß die Rotorwellen (23, 29) aller als zweipolige Einphasensynchronmotoren (27, 33) mit permanentmagnetischem Rotor ausgebildeten Antriebsmotoren axial miteinander gekuppelt sind, wobei alle Rotoren (25, 31) hinsichtlich ihrer magnetischen Polarisierung (49) in bezug auf den zugeordneten Stator gleich orientiert sind und wobei ein die Rotorwellen (23, 29) kuppelndes Element (35) die Rotorwellen (23, 29) derart kuppelt, daß die natürliche Ruhelage $\theta = \theta_0$ im montierten Zustand erhalten bleibt, wobei $\theta$ eine die Rotorwinkelposition gegenüber der Hauptrichtung des Statorfeldes kennzeichnende Koordinate ist, und wobei das bei einem positiven Strom erzeugte Moment beide Motoren in die gleiche Richtung dreht.

2. Antriebsvorrichtung nach Anspruch 1, dadurch gekennzeichnet, daß bei der Herstellung jedes Rotors (25, 31) die Kraftübertragungsflächen der jeweiligen Kupplungsteile (37, 39) an den entsprechend zu koppelnden Wellenenden bei allen Motoren im stromlosen Zustand vor dem Zusammenbau räumlich die gleiche Orientierung haben, so daß beim formschlüssigen Zusammenbau keine Verdrehkräfte auf die Rotoren ausgeübt werden.

3. Antriebsvorrichtung nach Anspruch 1 oder 2, dadurch gekennzeichnet, daß die Kupplungsteile aus einem Zahnkranz (39) auf der einen Motorwelle (29) und einem Zahnrad (37) auf der anderen Motorwelle (23) bestehen, die gegenseitig um eine halbe Zahnteilung $\frac{m \cdot \pi}{2}$ verdreht sind, wobei m der Zahnmodul ist.

4. Antriebsvorrichtung nach Anspruch 3, dadurch gekennzeichnet, daß ein Zwischenstück (41) vorgesehen ist, das auf dem Zahnkranz (37) des einen Rotors (25) aufsitzt, und daß ein geriffelter Stift (43) das Zwischenstück (41) mit einer hohlen Buchse (45) des anderen Rotors (31) verbindet.

5. Antriebsvorrichtung nach den Anspruchen 1 bis 4, dadurch gekennzeichnet, daß die Rotoren (25, 31) mit einer ihre Polarisierung kennzeichnenden Markierung versehen sind.

6. Antriebsvorrichtung nach den Ansprüchen 1 bis 5, dadurch gekennzeichnet, daß beim Einsatz von für 110 V ausgelegten Motoren für eine Betriebsspannung von 220 V immer zwei Motoren in Reihe schaltbar sind.

7. Verfahren zum Zusammenbau der Antriebsvorrichtung nach den Ansprüchen 1 bis 5, dadurch gekennzeichnet, daß die Rotoren (25, 31) vor ihrem Kuppeln mittels eines Gleichspannungsimpulses in die gewünschte Orientierung hinsichtlich der Statorgeometrie gebracht werden.

8. Antriebsvorrichtung für ein kleines Haushaltsgerät mit mindestens zwei Antriebsmotoren, die gemeinsam die Arbeitswelle einer Last antreiben, dadurch gekennzeichnet, daß die Rotorwellen (23, 29) aller als zweipolige Einphasensynchronmotoren (27, 33) ausgebildeten Antriebsmotoren axial miteinander gekuppelt sind, wobei die Rotoren (25, 31) hinsichtlich ihrer magnetischen Polarisierung (49) in bezug auf die zugeordnete Statorgeometrie einen Winkel miteinander bilden, der kleiner gleich 90° ist, derart, daß die im Stillstand auftretenden Reibungsmomente sowie die beim Betrieb auftretenden Lastmomente überwunden werden können und die auf die Last wirkenden Drehmomentschwankungen minimiert werden.

19
3
9
17
33
31
29
39
35
37
27
25
11
7
13
23
21
15
1

Fig.1

31
37
39
40
29
40
35
23
25

Fig.2

31
44
43
42
41
37
25

Fig. 3

27/33
25/31
55
50
51
57
59
θ = 0
58
40
θ = θ0
56
53
54
52

Fig.4

Europäisches Patentamt

# EUROPÄISCHER RECHERCHENBERICHT

Nummer der Anmeldung

EP 87 20 2296

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | PATENT ABSTRACTS OF JAPAN, Band 9, Nr. 56 (E-302)[1779], 12. März 1985; & JP-A-59 194 656 (OKI DENKI KOGYO K.K.) 05-11-1984 * Zusammenfassung; Figuren 1-10 * | 1-4,8 | H 02 K 16/00<br>H 02 K 21/18<br>A 47 J 43/08 |
| A | Idem | 7 | |
| Y | DE-A-3 026 679 (PAPST-MOTOREN) * Seite 1, Zeilen 4-13,31-37; Seite 4, Zeilen 20-23; Seite 7, Zeile 1 - Seite 9, Zeile 6, Figuren 1,2 * | 1-4,8 | |
| A | | 7 | |
| A | FR-A-1 068 665 (HESSEL) * Seite 2, linke Spalte, Zeilen 45-54; Seite 3, rechte Spalte, Zeile 48 - Seite 4, rechte Spalte, Zeile 22; Figuren 1,5,7 * | 1,4,8 | |
| A | DE-A-3 527 296 (FUJISAKI et al.) * Seite 14, Zeilen 13-19; Seite 25, Zeilen 5-12; Figuren 2-5 * | 1,2,7,8 | **RECHERCHIERTE SACHGEBIETE (Int. Cl.4)** |
| A | PATENT ABSTRACTS OF JAPAN, Band 9, Nr. 258 (E-350)[1981], 16. Oktober 1985; & JP-A-60 106 355 (SEIKO DENSHI KOGYO K.K.) 11-06-1985 * Zusammenfassung; Figur 3 * | 1,8 | H 02 K |
| A | FR-A-2 201 569 (ALSTHOM) * Seite 2, Zeilen 27-37; Seite 4, Zeilen 33-37; Figuren 1-7 * | 2,5,7 | |

-/-

Der vorliegende Recherchenbericht wurde für alle Patentansprüche erstellt

| Recherchenort | Abschlußdatum der Recherche | Prüfer |
|---|---|---|
| DEN HAAG | 01-03-1988 | TIO K.H. |

**KATEGORIE DER GENANNTEN DOKUMENTE**

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

Europäisches Patentamt

# EUROPÄISCHER RECHERCHENBERICHT

Nummer der Anmeldung

EP 87 20 2296

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | FR-A- 726 584 (CONSTRUCTIONS ELECTRIQUES)<br>* Seite 2, Zeilen 53-86; Figuren 5-9 *<br>----- | 6 | |
| | | | RECHERCHIERTE SACHGEBIETE (Int. Cl.4) |

Der vorliegende Recherchenbericht wurde für alle Patentansprüche erstellt

| Recherchenort | Abschlußdatum der Recherche | Prüfer |
|---|---|---|
| DEN HAAG | 01-03-1988 | TIO K.H. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)